# EUROPÄISCHE PATENTSCHRIFT

(11) **EP 1 070 641 B1**
(45) Veröffentlichungstag und Bekanntmachung des Hinweises auf die Patenterteilung: **20.10.2004**
(21) Anmeldenummer: 00114982.2
(22) Anmeldetag: 20.07.2000
(51) Int. Cl.: B60R 22/20, B60R 21/055

(54) **Höhenversteller für Fahrzeugsicherheitsgurt**
Height adjusting device for a vehicle seat belt
Dispositif de réglage en hauteur de la ceinture de sécurité d'un véhicule

(30) Priorität: 23.07.1999 DE 29912874 U
(43) Veröffentlichungstag der Anmeldung: 24.01.2001
(73) Patentinhaber: TRW Automotive GmbH, 73553 Alfdorf (DE)
(72) Erfinder: Schmid, Detlev, 73529 Schwäbisch Gmünd (DE)
(74) Vertreter: Sties, Jochen, Dipl.-Ing.

(56) Entgegenhaltungen:
- EP-A- 0 965 495
- DE-A- 19 654 344
- DE-A- 19 745 016
- DE-A- 19 803 025

## Beschreibung

Die Erfindung betrifft einen Höhenversteller für einen Fahrzeugsicherheitsgurt nach dem Oberbegriff des Anspruchs 1.

Ein Höhenversteller für einen Fahrzeugsicherheitsgurt mit einem Gleitstück, das in einer Schiene verschiebbar ist, einem an dem Gleitstück befestigten Umlenkbeschlag und einem Aufprallschutzelement ist aus der US-Patentschrift Nr. 5 529 344 bekannt. Der Umlenkbeschlag ist dort an einem in einer Schiene verschiebbaren Gleitstück mit Hilfe eines Schraubbolzens befestigt. Ein Aufprallschutzelement in Form einer Abdeckhaube deckt den dem Fahrzeuginnenraum zugewandten Kopf des Schraubbolzens ab. Dadurch wird verhindert, daß der Kopf des Fahrzeuginsassen bei einem Unfall direkt auf den Kopf des Schraubbolzens aufprallt. Die Abdeckhaube kann erst nach dem Anziehen des Schraubbolzens angebracht werden.

Aus der DE-A-197 45 016 ist ein gattungsgemäßer Höhenversteller für einen Fahrzeugsicherheitsgurt mit einem Aufprallschutzelement in Form eines hohlkörperartigen Deformationselements aus dünnwandigem Blech bekannt. Das Deformationselement ist zwischen einer Befestigungsschraube für den Umlenkbeschlag und einer vor einem Verkleidungsteil der Innenverkleidung angeordneten Abdeckkappe zwischengeschaltet.

Die EP-A-0 965 495 zeigt einen Höhenversteller mit einem Aufprallschutzelement, das hinter einem Abdeckteil des Höhenverstellers angeordnet und relativ zu diesem verschiebbar ist. Das Abdeckteil hat eine Öffnung für den Durchtritt des Sicherheitsgurts mit einer Abmessung in Verstellhochrichtung, die dem gesamten Verstellweg des Sicherheitsgurts entspricht.

Aus der DE-A-196 54 344 ist ein Höhenversteller bekannt, bei dem ein bewegliches Betätigungselement einer Abdeckanordnung an einem Hebel des Verstellmechanismus des Höhenverstellers angreift.

Mit der Erfindung soll ein unauffälliger Höhenversteller für einen Fahrzeugsicherheitsgurt geschaffen werden, der geringe HIC-Werte (head impact criterion) sicherstellt, einfach zu montieren und leicht zu bedienen ist.

Erfindungsgemäß ist hierzu ein Höhenversteller für einen Fahrzeugsicherheitsgurt mit den Merkmalen des Anspruchs 1 vorgesehen. Indem das Aufprallschutzelement oberhalb des Umlenkbeschlags befestigt ist, kann der Umlenkbeschlag unabhängig von der Anbringung des Aufprallschutzelements an dem Gleitstück befestigt werden. Auch wird ein modularer Aufbau des Höhenverstellers ermöglicht, der in einfacher Weise nach dem Baukastenprinzip an verschiedene Anforderungen, beispielsweise Einbauverhältnisse oder geforderte HIC-Werte, angepaßt werden kann. Aufgrund der durchgehenden Öffnung zur Betätigung des Verstellmechanismus des Höhenverstellers ist einerseits der Verstellmechanismus leicht zugänglich, und andererseits kann der Kopf des Fahrzeuginsassen vor dem Aufprall auf vorstehende Hebel, Knöpfe oder Riegel eines Verstellmechanismus geschützt werden.

In Weiterbildung der Erfindung hat das Aufprallschutzelement in Richtung von der Schiene weg eine größere Ausdehnung als der Umlenkbeschlag. Bei einem Aufprall trifft dadurch der Kopf eines Fahrzeuginsassen zuerst auf das Aufprallschutzelement auf, und ein Aufprall des Kopfes auf den stabilen Umlenkbeschlag selbst kann verhindert oder wenigstens gemildert werden.

In Weiterbildung der Erfindung ist das Aufprallschutzelement auf das Gleitstück aufschiebbar. Ebenfalls vorteilhaft ist es, wenn das Aufprallschutzelement mit an dem Gleitstück angreifenden Klipsverbindungselementen versehen ist. Diese Maßnahmen vereinfachen die Montage des erfindungsgemäßen Höhenverstellers weiter.

Vorteilhafterweise ist das Aufprallschutzelement quaderförmig und weist gegenüberliegende Seitenwände auf, die durch Verstärkungsrippen verbunden sind. Dadurch entsteht eine rippenförmige Struktur des Aufprallschutzelements, die einen Energieabbau beim Aufprall des Kopfes des Insassen auf das Aufprallschutzelement unterstützt.

Schließlich ist es vorteilhaft, wenn das Aufprallschutzelement aus Kunststoff, vorzugsweise aus Schaumstoff besteht. Kunststoffe sind kostengünstig herstellbar und können bezüglich ihrer Eigenschaften auf das für das Aufprallschutzelement geforderte Energieabbauverhalten abgestimmt werden.

Weitere Merkmale und Vorteile der Erfindung ergeben sich aus der folgenden Beschreibung der bevorzugten Ausführungsform der Erfindung im Zusammenhang mit der Zeichnung. In der Zeichnung zeigen:
Fig. 1 eine perspektivische Ansicht des erfindungsgemäßen Höhenverstellers gemäß der bevorzugten Ausführungsform,
Fig. 2 eine Schnittdarstellung des erfindungsgemäßen Höhenverstellers der Figur 1,
Fig. 3 eine weitere perspektivische Ansicht des Höhenverstellers, und
Fig. 4 eine Seitenansicht des Höhenverstellers der Fig. 1.

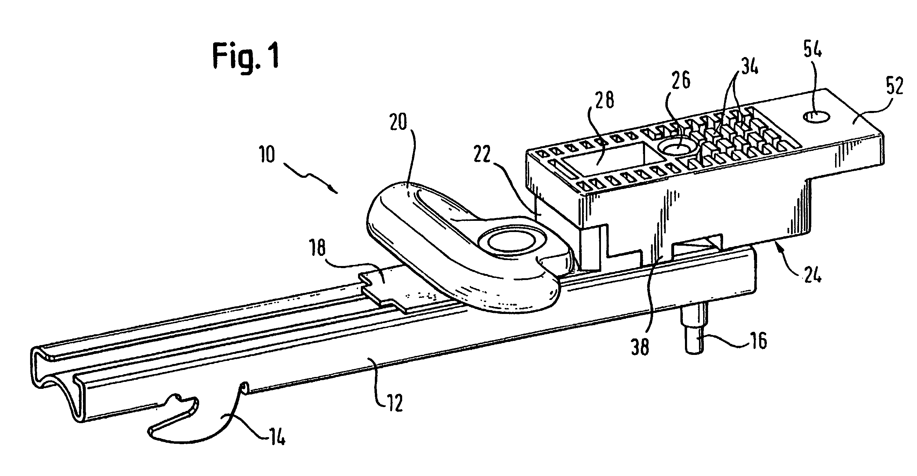

Der in der Figur 1 gezeigte erfindungsgemäße Höhenversteller 10 weist eine Schiene 12 zur Befestigung an einer Fahrzeugstruktur, beispielsweise der B-Säule, auf. Zur Befestigung an der Fahrzeugstruktur ist die Schiene 12 mit einem Haken 14 und einem Befestigungsbolzen 16 versehen. In der Schiene 12 ist ein Gleitstück 18 verschiebbar angeordnet. Auf dem Gleitstück 18 ist ein Umlenkbeschlag 20 für einen Sicherheitsgurt befestigt. Mit Hilfe eines Verstellmechanismus 22 kann das Gleitstück 18 in verschiedenen Positionen entlang der Schiene 12 arretiert werden. Zur Verringerung der HIC-Werte beim Aufprall des Kopfes eines Fahrzeuginsassen auf den Höhenversteller ist der Umlenkbeschlag 20 mit einer energieabbauenden Umhüllung versehen, und in Verstellhochrichtung ist oberhalb des Umlenkbeschlags 20 ein Aufprallschutzelement 24 an dem Gleitstück 18 befestigt. Das Aufprallschutzelement 24 ist als im wesentlichen quaderförmiges Kunststoffteil ausgebildet. Das Aufprallschutzelement 24 weist durchgehende Öffnungen 26, 28 und 54 auf. Über die Öffnung 26 ist der Schraubbolzen 16 vom Fahrzeuginnenraum aus zugänglich, so daß auch bei aufgeschobenem Aufprallschutzelement 24 der vormontierte Höhenversteller 10 an der Fahrzeugstruktur befestigt werden kann. Über die Öffnung 28 kann der Verstellmechanismus 22 des Höhenverstellers 10 erreicht und bedient werden. Der Verstellmechanismus 22 ist damit vom Fahrzeuginnenraum aus zugänglich, gleichzeitig wird aber auch der Kopf des Fahrzeuginsassen vor dem Aufprall auf den Verstellmechanismus 22 geschützt. Am oberen Ende des Aufprallschutzelementes ist ferner ein Ansatz 52 mit der Bohrung 54 vorgesehen, deren Funktion untenstehend erläutert wird.

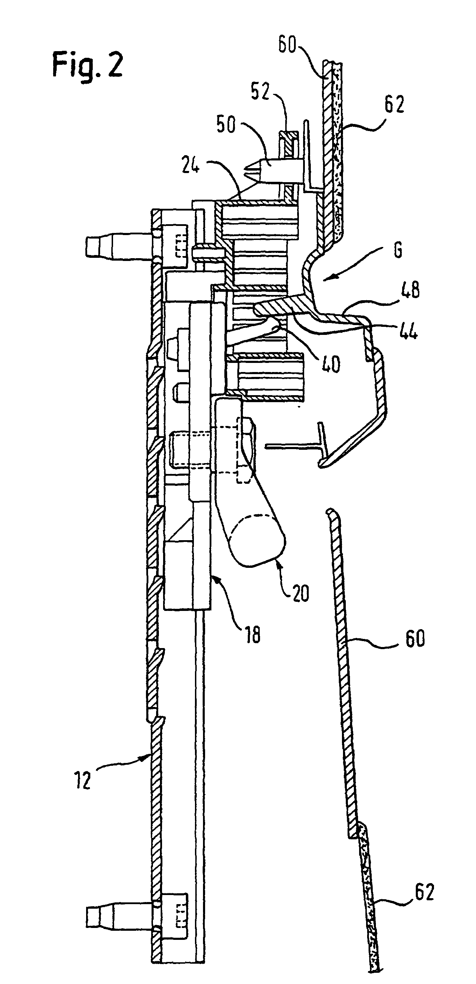

In der Schnittdarstellung gemäß Figur 2 ist das Zusammenwirken der einzelnen Teile deutlich zu sehen sowie deren Unterbringung hinter einer Innenverkleidung 62 der Fahrzeugsäule bzw. dem Abdeckteil 60. Die eigentliche Betätigung des Höhenverstellers geschieht über ein Betätigungselement 48, das mit einem Betätigungsfortsatz 44 versehen ist. Dieser Betätigungsfortsatz kann mit dem Betätigungselement einstückig ausgeführt sein und erstreckt sich wenigstens zum Teil in die Öffnung 28 des Aufprallschutzelementes 24. Dort liegt der Betätigungsfortsatz auf dem Hebel des Verriegelungsmechanismus auf. Genauer gesagt, drückt dieser Hebel 40, der durch eine nicht dargestellte Feder vorgespannt ist, von unten gegen den Betätigungsfortsatz 44 des Betätigungselementes 48 und drückt dieses gegen einen Anschlag (nicht gezeigt) am Abdeckteil 60. Im Normalbetrieb liegt das Betätigungselement klapperfrei an dem Anschlag an; wird das Betätigungselement über die Griffmulde G nach unten gegen den Hebel gedrückt, kann unter Überwindung der diesen vorspannenden Feder der Verriegelungsmechanismus entriegelt und der Höhenversteller relativ zur Schiene verschoben werden. Durch die Bohrung 54 des Ansatzes 52 erstreckt sich ein Mitnahmezapfen 50 des Abdeckteils 60. Über diesen Zapfen wird bei Verschiebung des Höhenverstellers mit dem daran befestigtem Aufprallschutzelement das Abdeckteil 60 relativ zur fahrzeugfesten Innenverkleidung 62 der Fahrzeugsäule verschoben.

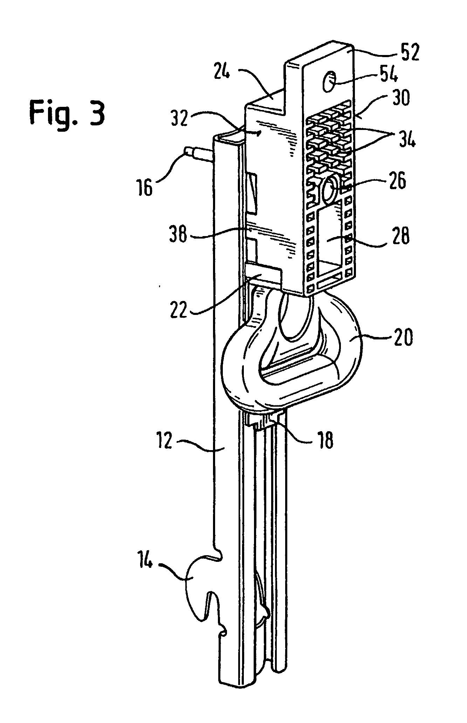

In der perspektivischen Ansicht der Figur 3 ist zu erkennen, daß das quaderförmige Aufprallschutzelement 24 gegenüberliegende Seitenwände 30 und 32 aufweist, zwischen denen sich Rippen 34 erstrecken. Die Rippen 34 können in Längsrichtung des quaderförmigen Aufprallschutzelements 24 unterbrochen sein, so daß sich einzelne, freistehende Rippenabschnitte ergeben. Das Aufprallschutzelement 24 hat damit eine Rippenstruktur, die für den Energieabbau beim Aufprall des Kopfes eines Insassen gut geeignet ist. Ebenfalls gut zu erkennen ist, daß der Umlenkbeschlag 20 unabhängig von dem Aufprallschutzelement 24 an dem Gleitstück 18 befestigt ist. Mit dem Aufsetzen des Aufprallschutzelements 24 muß damit nicht gewartet werden, bis der Umlenkbeschlag 20 endgültig an dem Gleitstück 18 fixiert ist. Die durchgehenden Öffnungen 26 und 28 des Aufprallschutzelementes 24 weisen Wandungen auf, die über die Rippen 34 mit den Seitenwänden 30 und 32 des Aufprallschutzelementes 24 verbunden sind. Die Rippenstruktur erstreckt sich damit über das gesamte Aufprallschutzelement 24, so daß über die gesamte Ausdehnung des Aufprallschutzelementes 24 im wesentlichen gleiche Energieabbaueigenschaften sichergestellt sind.

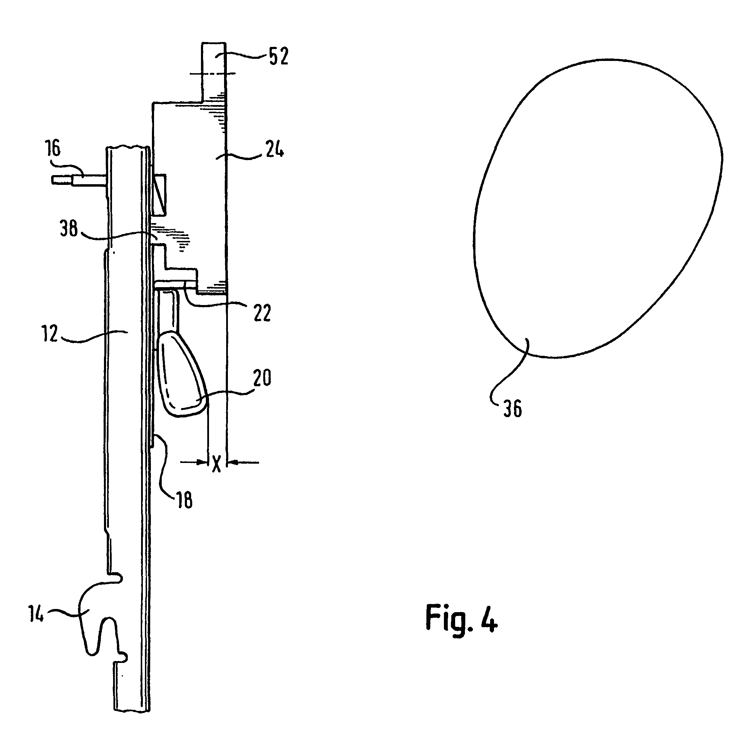

In der Seitenansicht der Figur 4 ist zu erkennen, daß das Aufprallschutzelement 24 in Richtung auf einen nur angedeuteten Kopf 36 eines Fahrzeuginsassen eine größere Ausdehnung hat als der Umlenkbeschlag 20. Das Aufprallschutzelement 24 erstreckt sich dabei um eine Strecke X weiter in Richtung von der Schiene 12 weg auf den Kopf des Fahrzeuginsassen 36 zu als der Umlenkbeschlag 20. Der Kopf 36 des Fahrzeuginsassen wird daher zuerst auf das Aufprallschutzelement 24 aufprallen, so daß der Kontakt des Kopfes 36 mit dem Umlenkbeschlag 20 verhindert oder zumindest abgemildert ist. Der Kopf 36 des Insassen wird aber auch zuverlässig vor dem Aufprall auf den Verstellmechanismus 22 des Höhenverstellers 10 geschützt.

Das Aufprallschutzelement 24 weist Klipsverbindungselemente 38 auf, die an dem Gleitstück 18 angreifen. Zur Montage wird das Aufprallschutzelement 24 daher zunächst von oben auf das Gleitstück 18 aufgeschoben, bis die Klipsverbindungselemente 38 in entsprechende Ausnehmungen an dem Gleitstück 18 einrasten und damit das Aufprallschutzelement 24 zuverlässig an dem Gleitstück 18 befestigen.

## Patentansprüche

1. Höhenversteller für einen Fahrzeugsicherheitsgurt, mit
einem Gleitstück (18), das in einer Schiene (12) verschiebbar ist,
einem Verstellmechanismus mit einem Hebel (40), durch den eine Bewegung des Gleitstücks (18) an der Schiene (12) freigegeben oder blockiert werden kann,
einem am Gleitstück (18) befestigten Umlenkbeschlag (20), und
einem Aufprallschutzelement (24), das am Gleitstück (18) befestigt ist und sich vom Gleitstück (18) aus in Richtung von der Schiene (12) weg erstreckt,
**dadurch gekennzeichnet, daß**
das Aufprallschutzelement (24) hinter einem Abdeckteil (60) angeordnet ist, welches wiederum hinter einer Innenverkleidung (62) angeordnet ist,
wobei das Abdeckteil (60) mit dem Aufprallschutzelement (24) in Eingriff ist und ein mit dem Abdeckteil (60) relativ zur Innenverkleidung (62) verschiebbares Betätigungselement (48) für den Hebel (40) aufweist, und
daß das Aufprallschutzelement (24) eine durchgehende Öffnung (28) aufweist, um eine Betätigung des Verstellmechanismus des Höhenverstellers zu ermöglichen.

2. Höhenversteller nach Anspruch 1, **dadurch gekennzeichnet, daß** das Aufprallschutzelement (24) einen oberen Ansatz (52) mit einer Bohrung (54) aufweist, durch die sich ein Mitnahmezapfen (50) für das Abdeckteil (60) erstreckt.

3. Höhenversteller nach Anspruch 1 oder 2, **dadurch gekennzeichnet, daß** das Betätigungselement (48) einen Betätigungsfortsatz (44) aufweist, der sich wenigstens teilweise in die Öffnung (28) des Aufprallschutzelementes (24) erstreckt.

4. Höhenversteller nach Anspruch 3, **dadurch gekennzeichnet, daß** der Hebel (40) und der Betätigungsfortsatz (44) im Bereich der Öffnung (28) des Aufprallschutzelementes (24) zusammenwirken.

5. Höhenversteller nach einem der vorstehenden Ansprüche, **dadurch gekennzeichnet, daß** die Öffnung (28) des Aufprallschutzelementes (24) im wesentlichen in Fahrzeugquerrichtung verläuft.

6. Höhenversteller nach einem der vorstehenden Ansprüche, **dadurch gekennzeichnet, daß** das Aufprallschutzelement (24) in Richtung von der Schiene (12) weg eine größere Ausdehnung hat als der Umlenkbeschlag (20).

7. Höhenversteller nach einem der vorstehenden Ansprüche, **dadurch gekennzeichnet, daß** das Aufprallschutzelement (24) auf das Gleitstück (18) aufschiebbar ist.

8. Höhenversteller nach einem der vorstehenden Ansprüche, **dadurch gekennzeichnet, daß** das Aufprallschutzelement (24) mit an dem Gleitstück (18) angreifenden Klipsverbindungselementen (38) versehen ist.

9. Höhenversteller nach einem der vorstehenden Ansprüche, **dadurch gekennzeichnet, daß** das Aufprallschutzelement (24) im wesentlichen quaderförmig ist und gegenüberliegende Seitenwände (30, 32) aufweist, die durch Verstärkungsrippen (34) verbunden sind.

10. Höhenversteller nach einem der vorstehenden Ansprüche, **dadurch gekennzeichnet, daß** das Aufprallschutzsystem (24) aus Kunststoff besteht.

11. Höhenversteller nach Anspruch 10, **dadurch gekennzeichnet, daß** das Aufprallschutzelement (24) aus Schaumstoff besteht.

## Claims

1. A height adjuster for a vehicle safety belt, comprising
a slide piece (18) adapted to be shifted within a track (12),
an adjusting mechanism having a lever (40) by means of which a movement of the slide piece (18) on the track (12) can be unlocked or locked,
a deflection fitting (20) attached to the slide piece (18), and
an impact protection member (24) which is attached to the slide piece (18) and extends from the slide piece (18) in the direction away from the track (12),
**characterized in that**
the impact protection member (24) is arranged behind a cover part (60) which in turn is arranged behind an inner lining (62),
the cover part (60) being in engagement with the impact protection member (24) and having an actuating member (48) for the lever (40), the actuating member (48) being adapted to be shifted with the cover part (60) in relation to the inner lining (62), and
that the impact protection member (24) has a through opening (28) in order to allow actuation of the adjusting mechanism of the height adjuster.

2. The height adjuster according to claim 1, **characterized in that** the impact protection member (24) has an upper prolongation (52) with a hole (54) through which a carrier pin (50) for the cover part (60) extends.

3. The height adjuster according to claim 1 or 2, **characterized in that** the actuating member (48) has an actuating extension (44) which at least partially extends into the opening (28) of the impact protection member (24).

4. The height adjuster according to claim 3, **characterized in that** the lever (40) and the actuating extension (44) cooperate in the region of the opening (28) of the impact protection member (24).

5. The height adjuster according to any of the preceding claims, **characterized in that** the opening (28) of the impact protection member (24) extends substantially in the transverse direction of the vehicle.

6. The height adjuster according to any of the preceding claims, **characterized in that** the impact protection member (24) has a larger extent in the direction away from the track (12) than the deflection fitting (20).

7. The height adjuster according to any of the preceding claims, **characterized in that** the impact protection member (24) may be slipped onto the slide piece (18).

8. The height adjuster according to any of the preceding claims, **characterized in that** the impact protection member (24) is provided with clip connection members (38) engaging the slide piece (18).

9. The height adjuster according to any of the preceding claims, **characterized in that** the impact protection member (24) is substantially parallelepipedal and comprises opposing side walls (30, 32) which are connected by reinforcing ribs (34).

10. The height adjuster according to any of the preceding claims, **characterized in that** the impact protection system (24) consists of plastic.

11. The height adjuster according to claim 10, **characterized in that** the impact protection member (24) consists of a foamed material.

## Revendications

1. Dispositif de réglage en hauteur pour une ceinture de sécurité de véhicule, comportant
une pièce coulissante (18) qui peut être déplacée dans un rail (12),
un mécanisme de réglage avec un levier (40) par lequel un mouvement de la pièce coulissante (18) sur le rail (12) peut être libéré ou bloqué,
une ferrure de renvoi (20) fixée sur la pièce coulissante (18), et
un élément de protection contre les impacts (24) qui est fixé sur la pièce coulissante (18) et qui s'étend depuis de la pièce coulissante (18) en direction d'éloignement du rail (12),
**caractérisé en ce que**
l'élément de protection contre les impacts (24) est agencé derrière une partie de recouvrement (60) qui, à son tour, est agencée derrière un habillage intérieur (62),
la partie de recouvrement (60) étant en engagement avec l'élément de protection contre les impacts (24) et présentant un élément d'actionnement (48) pour le levier (40), lequel peut être déplacé avec la partie de recouvrement (60) par rapport à l'habillage intérieur (62), et
**en ce que** l'élément de protection contre les impacts (24) présente une ouverture traversante (28) pour permettre un actionnement du mécanisme de réglage du dispositif de réglage en hauteur.

2. Dispositif de réglage en hauteur selon la revendication 1, **caractérisé en ce que** l'élément de protection contre les impacts (24) présente un talon supérieur (52) avec un perçage (54) à travers lequel s'étend un tenon d'entraînement (50) pour la partie de recouvrement (60).

3. Dispositif de réglage en hauteur selon la revendication 1 ou 2, **caractérisé en ce que** l'élément d'actionnement (48) présente un appendice d'actionnement (44) qui s'étend au moins partiellement dans l'ouverture (28) de l'élément de protection contre les impacts (24).

4. Dispositif de réglage en hauteur selon la revendication 3, **caractérisé en ce que** le levier (40) et l'appendice d'actionnement (44) coopèrent dans la région de l'ouverture (28) de l'élément de protection contre les impacts (24).

5. Dispositif de réglage en hauteur selon l'une des revendications précédentes, **caractérisé en ce que** l'ouverture (28) de l'élément de protection contre les impacts (24) s'étend sensiblement en direction transversale du véhicule.

6. Dispositif de réglage en hauteur selon l'une des revendications précédentes, **caractérisé en ce que** l'élément de protection contre les impacts (24) a une extension plus grande en direction d'éloignement du rail que la ferrure de renvoi (20).

7. Dispositif de réglage en hauteur selon l'une des revendications précédentes, **caractérisé en ce que** l'élément de protection contre les impacts (24) peut être enfilé sur la pièce coulissante (18).

8. Dispositif de réglage en hauteur selon l'une des revendications précédentes, **caractérisé en ce que** l'élément de protection contre les impacts (24) est pourvu d'éléments de liaison par clips (38) s'engageant sur la pièce coulissante (18).

9. Dispositif de réglage en hauteur selon l'une des revendications précédentes, **caractérisé en ce que** l'élément de protection contre les impacts (24) est de forme sensiblement parallélépipédique et présente des parois latérales (30, 32) opposées qui sont reliées par des nervures de renforcement (34).

10. Dispositif de réglage en hauteur selon l'une des revendications précédentes, **caractérisé en ce que** le système de protection contre les impacts (24) est en matière plastique.

11. Dispositif de réglage en hauteur selon la revendication 10, **caractérisé en ce que** l'élément de protection contre les impacts (24) est en mousse alvéolaire.
